# EUROPEAN PATENT APPLICATION

(11) **EP 2 351 961 A1**
(43) Date of publication of application: **03.08.2011**
(21) Application number: 09831780.3
(22) Date of filing: 05.11.2009
(51) Int. Cl.: F21S 2/00, G02F 1/13357, F21Y 101/02

(54) **LIGHT SOURCE UNIT, ILLUMINATING DEVICE, DISPLAY DEVICE AND TELEVISION RECEIVER**

(30) Priority: 09.12.2008 JP 2008313216
(71) Applicant: Sharp Kabushiki Kaisha, Osaka-shi, Osaka 545-8522 (JP)
(72) Inventor: YOSHIKAWA, Takahiro, Osaka 545-8522 (JP)
(74) Representative: Müller-Boré & Partner Patentanwälte
(86) International application number: PCT/JP2009/068876
(87) International publication number: WO 2010/067674

(57) **Abstract**

In a light source unit, a lighting device, a display device and a television receiver, display quality is not deteriorated. A light source unit includes a number of light guide members 27. The light guide members 27 are arranged in a first direction and in a second direction that is substantially perpendicular to the first direction. Each light guide member 27 is formed in a flat shape and includes a light exit portion 27A and a light guide portion 27B. Light entering the light guide member 27 exits from the light exit portion 27A and the light guide portion 27B guides light entering the light guide member 27 to the light exit portion 27A. Extended portions 40 are formed on facing side end portions of the light guide members 27 that are arranged in adjacent to each other in the second direction. Each of the extended portions 40 extends from the corresponding side end portion of the light guide member so as to be fitted to and overlap each other in a front-rear direction. The light guide members 27 are arranged in the first direction such that the light exit portion 27A of one light guide member 27 overlaps the light guide portion 27B of another light guide member on a front side. The light guide members 27 are arranged in the second direction such that the extended portions 40 overlap each other in the front-rear direction.

## Description

### TECHNICAL FIELD

The present invention relates to a light source unit, a lighting device, a display device and a television receiver.

### BACKGROUND ART

A lighting device including a light source unit having light sources and light guide members has been known as a lighting device for a display panel (for example, Patent Document 1). In such a lighting device, light emitted from the light sources and entering the light guide member exits from the light guide members. Such a lighting device including the light source unit has an advantage that the whole display panel is illuminated with improved brightness compared to a lighting device of a side-edge type in which light enters the side surface of a single light guide plate.
Patent Document 1: Japanese Published Patent Application No. 2004-265635

### Problem to be Solved by the Invention

In many cases of the lighting device including the above-mentioned light source unit, the light guide members are arranged with gaps between the adjacent light guide members to allow thermal expansion and thermal contraction of the light guide members. However, it is difficult to arrange all the light guide members with a constant gap. Therefore, the light guide members are less likely to be arranged evenly and a size of the gap between the light guide members may be greater or smaller than a predetermined size. Light does not exit from the gaps between the light guide members. Therefore, if the size of the gap increases, dark lines may be recognized along borders between the adjacent light guide members and this may deteriorate display quality.

### DISCLOSURE OF THE PRESENT INVENTION

The present invention was made in view of the foregoing circumstances. An object of the present invention is to provide a light source unit, a lighting device, a display device and a television receiver that are less likely to deteriorate display quality.

### Means for Solving the Problem

A light source unit of the present invention includes a light source and light guide members. The light guide members are configured to guide light emitted from the light source and entering therein and arranged in a first direction and in a second direction that is substantially perpendicular to the first direction. Each of the light guide members has a light exit portion, a light guide portion, and an extended portion. The light emitted from the light source and entering the light guide member exits from the light exit portion. The light guide portion guides the light emitted from the light source and entering the light guide member to the light exit portion. The extended portion is provided on each of facing side ends of the light guide members that are arranged in adjacent to each other in the second direction. The extended portion extends from a corresponding side end. The light guide members are arranged in the first direction such that the light exit portion of one light guide member overlaps the light guide portion of another light guide member on a front side, and the light guide members are arranged in the second direction such that the extended portions provided on the facing side ends of the adjacent light guide members overlap each other in an overlapping direction in which the light exit portion and the light guide portion overlap each other.
With this configuration, even if the light guide members are less likely to be arranged evenly, a gap penetrating straight through the front-rear direction is less likely to be widely opened between the light guide members. Therefore, dark lines are not displayed between the light guide members and display quality is not deteriorated.

The extended portion may be provided on the light guide portion of the light guide member. With this configuration, the extended portions that overlap each other in the overlapping direction are provided between the light exit portions of the light guide members that are arranged on a front side. The gap between the light exit portions is irradiated with the light leaking from the extended portions. Therefore, dark lines are not displayed and display quality is not deteriorated.

The extended portion may be provided on the light exit portion of the light guide member. With this configuration, the extended portions overlap in the overlapping direction, and therefore, a gap penetrating straight through the front-rear direction is less likely to be widely opened between the light exit portions. Therefore, dark lines are not displayed and display quality is not deteriorated.
The extended portion may be provided on an area ranging from the light guide portion to the light exit portion of the light guide member.

Surfaces of the extended portions that overlap each other in the overlapping direction, the surfaces facing each other in the overlapping direction, may be sloped surfaces having substantially same inclination.
Surfaces of the extended portions that overlap each other in the overlapping direction, the surfaces facing each other in the overlapping direction, may be flat surfaces substantially parallel to a plate surface of the light guide member.

A reflection sheet may be provided on an area of the light guide member on a rear side corresponding to the light exit portion.
An auxiliary reflection sheet may be provided on an area ranging over the light guide members on a rear side, and the light guide members are arranged in adjacent to each other in the second direction. With this configuration, the light leaking from the light guide members is reflected by the reflection sheet and the gap between the light guide members that are arranged in adjacent to each other in the second direction is irradiated with the reflected light. Therefore, dark lines are not displayed.

The light guide members may be integrally arranged in the second direction to form a single light guide plate, and the extended portion may be provided each of at least two ends of the light guide plate in an arrangement direction in which the light guide members are arranged.
A slit may be provided between the light guide members and the extended portion may be provided in the slit.

A lighting device of the present invention includes the above light source unit and an optical member provided on a light emitting surface side of the light source unit.
A display device of the present invention includes the above lighting device and a display panel configured to provide display using light from the lighting device.
The display panel may be a liquid crystal panel including liquid crystals.
A television receiver of the present invention includes the display device.

### Effect of the Invention

The present invention provides a light source unit, a lighting device, a display device and a television receiver that are less likely to deteriorate display quality.

### BRIEF DESCRIPTION OF THE DRAWINGS

[FIG. 1] is an exploded perspective view illustrating a general construction of a television receiver according to the first embodiment of the present invention;
[FIG. 2] is an exploded perspective view illustrating a general construction of a liquid crystal display device;
[FIG. 3] is a front view of the light source unit;
[FIG. 4] is a cross-sectional view of an end portion of a liquid crystal display device along the long side thereof;
[FIG. 5] is a cross-sectional view of an end portion of the liquid crystal display device along the short side thereof;
[FIG. 6] is a front view of the light guide plate;
[FIG. 7] is a rear view of the light guide plate;
[FIG. 8] is a front view illustrating arrangement of the light guide plates;
[FIG. 9] is a magnified cross-sectional view of a part of the light source unit along an A-A line in FIG. 5;
[FIG.10] is a magnified cross-sectional view of an end portion of a liquid crystal display device along the long side thereof according to a second embodiment;
[FIG. 11] is a front view of a light guide plate according to another embodiment (3);
[FIG. 12] is a front view of a light guide plate according to another embodiment (4); and
[FIG. 13] is a front view of a light guide plate according to another embodiment (5).

### Explanation of Symbols

TV: Television receiver, 10, 70: Liquid crystal display device (Display device) , 11: Liquid crystal panel (Display panel) , 13: Backlight unit (Lighting device), 14: LED (Light source), 15: Light guide plate, 16: Light source unit, 26: Slit, 27:Unit light guide member (Light guide member), 27A: Light exit portion, 27B: Light guide portion, 40, 71, 80, 90, 100: Extended portion, 41: Sloped portion, 51: Reflection sheet, 52: Auxiliary reflection sheet, 53: Optical member, 72A, 72B: Flat surface

### BEST MODE FOR CARRYING OUT THE INVENTION

### <First embodiment>

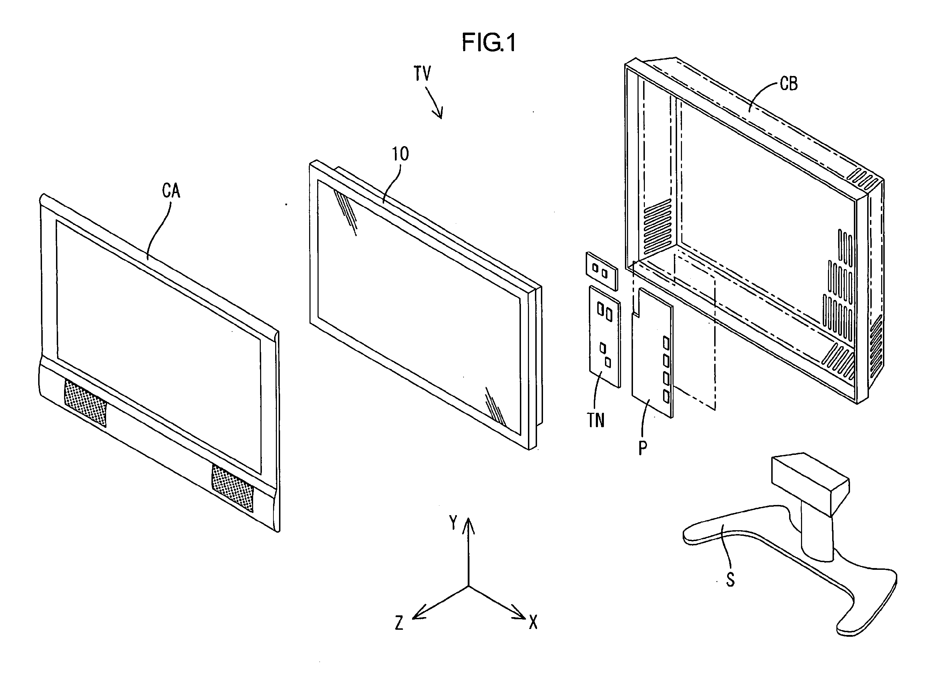

The first embodiment of the present invention will be explained with reference to FIGS. 1 to 9. In this embodiment, a television receiver TV including a liquid crystal display device 10 will be explained. As illustrated in FIG. 1, the television receiver TV includes the liquid crystal display device 10, cabinets CA and CB, a power source P, a tuner TN, and a stand S. The cabinets CA and CB sandwich the liquid crystal display device 10 therebetween. The tuner TN receives TV broadcasts. The liquid crystal display device 10 is housed in the cabinets CA and CB in a vertical position in which a display surface is set along a substantially vertical direction. In explaining each component, a lower left side in FIG. 1 (a front side or a display side of the television receiver) indicates a front side and an upper right side in FIG. 1 indicates a rear side. An X-axis in the figures indicates a direction along a long-side direction of the liquid crystal display device 10. A Y-axis in the figures indicates a direction along a short-side direction of the liquid crystal display device 10 (a positive side corresponds to an upper side and a negative side corresponds to a lower side). A Z-axis in the figures indicates a front-rear direction of the liquid crystal display device 10 (a positive side corresponds to a front side and a negative side corresponds to a rear side). The Y-axis direction corresponds to a first direction and the X-axis direction corresponds to a second direction.

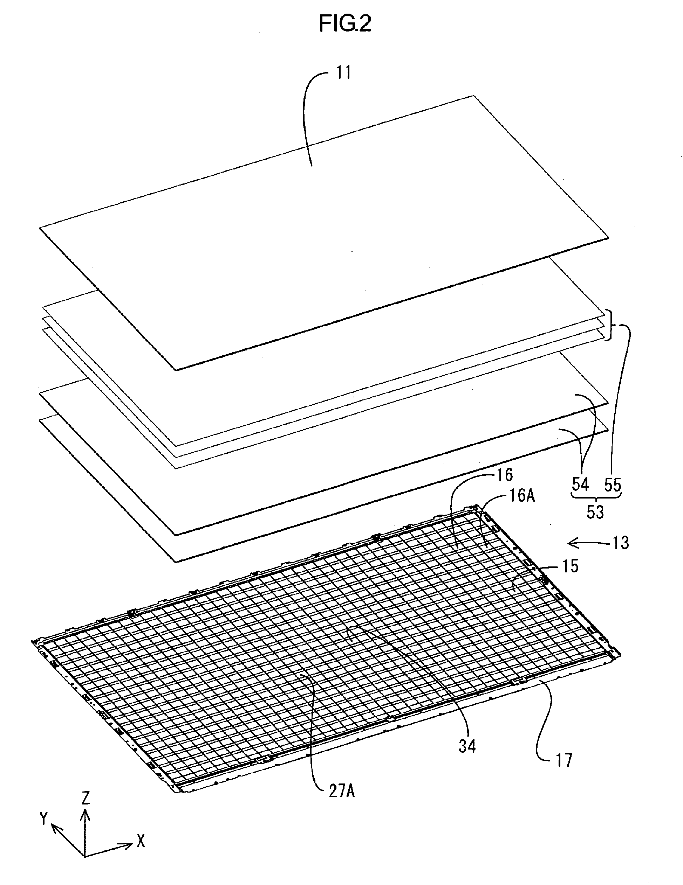

The liquid crystal display device 10 has a landscape rectangular overall shape in a front-rear view. The liquid crystal display device 10 includes a liquid crystal panel 11 (a display panel) and a backlight unit 13 (a lighting device) , which is an external light source that irradiates the liquid crystal panel 11 with light (see FIG. 2). The liquid crystal panel 11 and the backlight unit 13 are held together by a holding member such as a bezel 58.

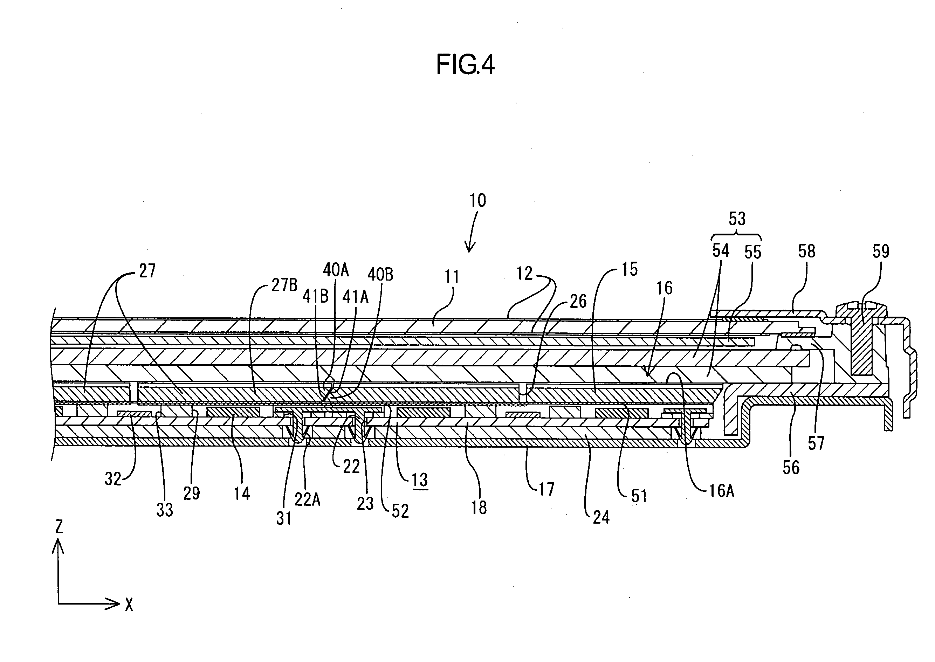

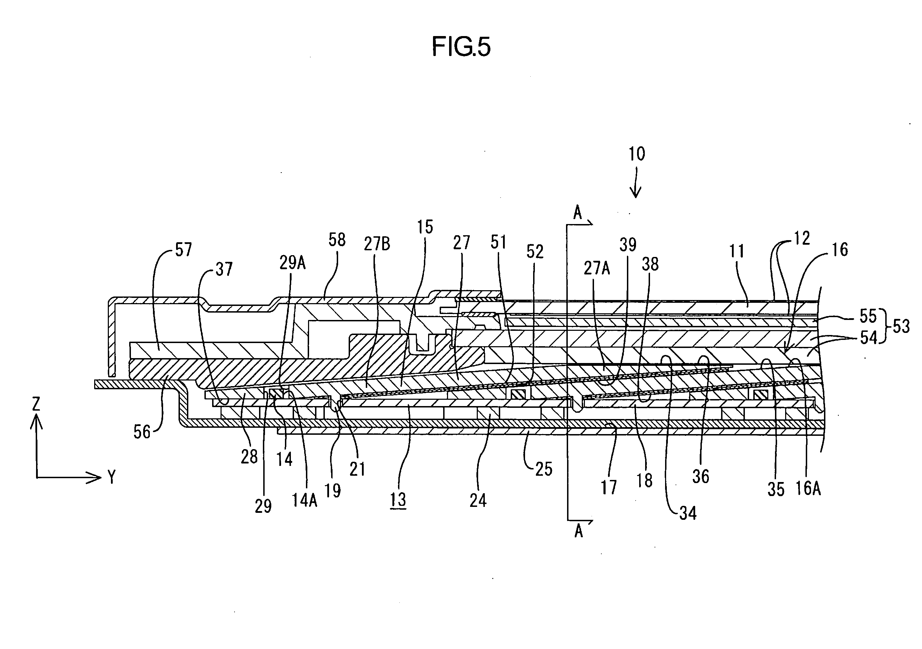

The liquid crystal panel 11 has a rectangular plan view and includes a pair of transparent glass substrates (having transparency) and a liquid crystal layer (not illustrated) sealed between the substrates. The liquid crystals change their optical properties in response to the voltage application. Polarizing plates 12 are provided on the front surface and the rear surface of the liquid crystal panel 11 (see FIGS. 4 and 5).

The backlight unit 13 is a direct-type backlight unit 13 and is arranged just under the rear side of the liquid crystal panel 11. The backlight unit 13 includes LEDs 14 (light source) and light guide plates 15 through which the light emitted from the LEDs 14 and entering the light guide plates 15 exits. The LEDs 14 and the light guide plates 15 are arranged in a plane-arrangement to form a light source unit 16.

The light source unit 16 includes a chassis 17 having a shallow-bowl shape recessed to the rear-surface side (a side opposite from the liquid crystal panel 11). The chassis 17 is made of metal and a number of LED boards 18 on which surface-mount LEDs are mounted are arranged on the bottom surface (front surface).

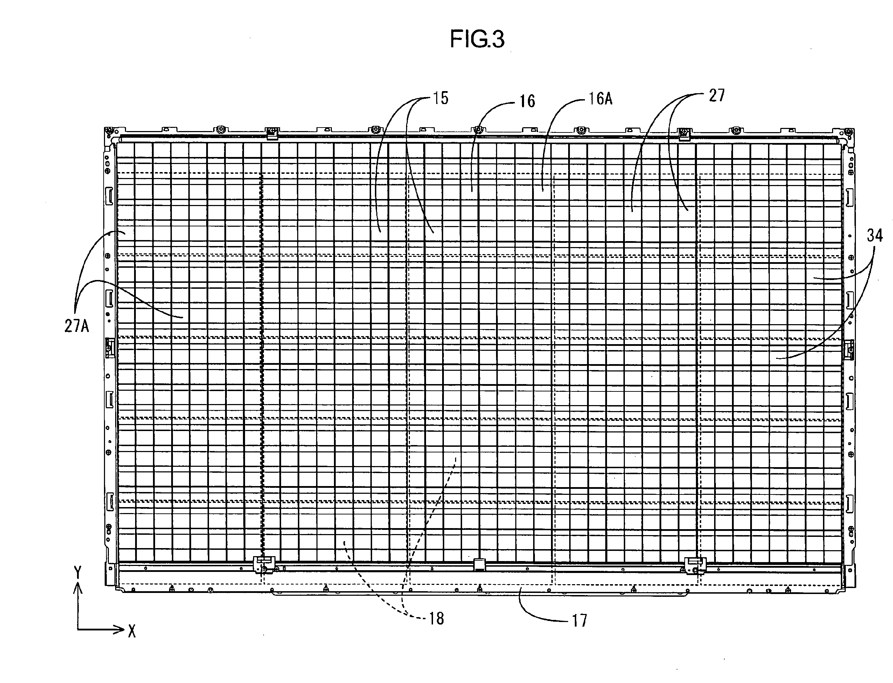

Each LED board 18 is made of synthetic resin and the surfaces thereof are in white that provides high light reflectivity. The LED board 18 is formed in a plate-like shape having a rectangular front-rear view. The LED boards 18 are arranged on the bottom surface of the chassis 17 such that the long sides thereof match the long side of the chassis 17 (see FIG. 3) . The entire bottom surface of the chassis 17 is covered with a number of LED boards 18. Specifically, five along the long-side direction of the chassis 17 by five along the short-side direction and a total of 25 LED boards 18 are arranged.

Wiring patterns that are metal films (not illustrated) are formed on each LED board 18 and the LEDs 14 are mounted in predetermined locations on the LED board 18. The LEDs 14 are arranged along the long-side direction and the short-side direction of the LED board 18 at a certain pitch. Specifically, eight along the long-side direction of each LED board 18 by four along the short-side direction thereof and a total of 32 LEDs are arranged with a constant pitch. The LED boards 18 are electrically connected to a control board (not illustrated) that performs driving control of the LEDs 14.

The LED board 18 has positioning holes 21 in each of which a positioning protrusion 19 formed on the light guide plate 15 is inserted to be held (see FIG. 5). The LED board 18 has clip holding holes 23 in each of which a clip 22 is inserted to be held (see FIG. 4). The clips 22 fix the light guide plate 15 to the LED board 18. The LED board 18 is fixed to the bottom plate of the chassis 17 by screws that are not illustrated.

A heat transfer member 24 is provided between the LED board 18 and the bottom surface (front surface) of the chassis 17. The heat transfer member 24 is made of a synthetic resin or metal having good heat transfer property. A heat sink 25 is provided on an outer surface (rear surface) of the chassis 17. The heat sink 25 is made of a synthetic resin or metal having good heat transfer property.

The LED 14 has a block-like overall shape that is long in the horizontal direction. The LEDs 14 are side emitting LEDs. A side surface of each LED 14 is a light emitting surface 14A. The LEDs 14 are mounted to the LED board 18 by soldering such that its long side matches the long side of the LED board 18. Specifically, the light emitting surface 14A of each LED 14 is substantially perpendicular to the short side of the LED board 18 and substantially vertical to the surface of the LED board 18. A light axis of light emitted from the LED 14 is substantially parallel to the short side of the LED board 18 and substantially parallel to the surface of the LED board 18. Each LED 14 includes three different kinds of the LED chips (not illustrated) with different main emission wavelengths. Specifically, each LED chip emits a single color of light of red (R), green (G) or blue (B).

A number of light guide plates 15 are arranged parallel to each other on the surface of the LED board 18. The front surface of the LED board 18 is covered with the light guide plates 15. Each light guide plate 15 is made of substantially transparent (having high light transmission capability) synthetic resin (e.g. polycarbonate), a reflective index of which is significantly higher than that of air. The light guide plate 15 has a rectangular overall shape in the front-rear view. Each light guide plate 15 is arranged on the LED board 18 such that the long-side direction of the light guide plate 15 is parallel to the light axis of the LED 14.

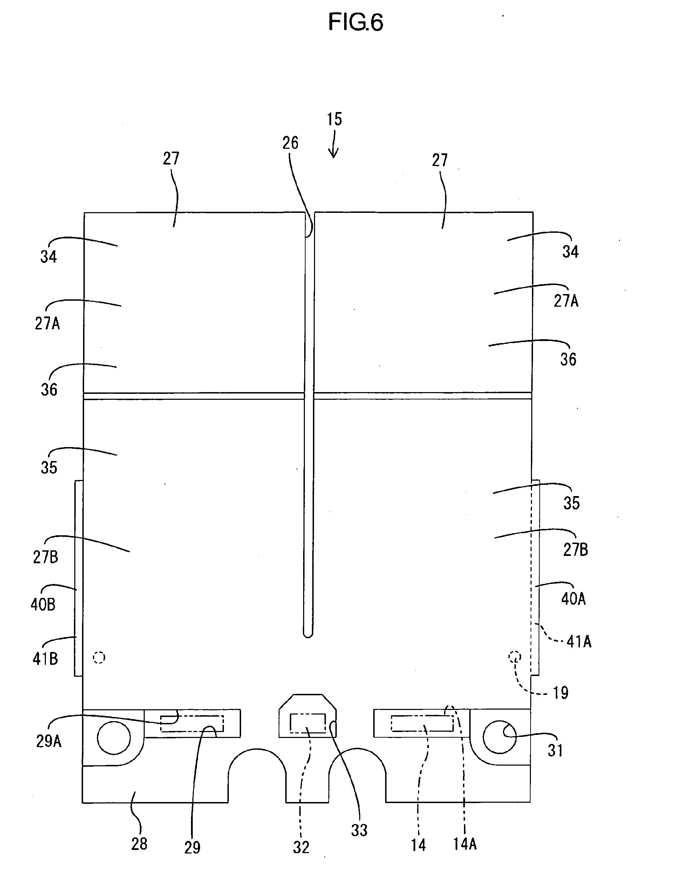

As illustrated in FIG. 6, a slit 26 is formed at a portion (at the middle of short dimension of the light guide plate 15) so as to divide an area of the light guide member 15 into two with respect to the short-side direction. The slit 26 runs straight along the long-side direction of the light guide plate 15 from one end toward the another end. The one end of the slit 26 is open and the another end is closed.

A unit light guide member 27 (light guide member) is formed on either side of the slit 26 on the light guide plate 15. The unit light guide members 27 are optically independent from each other. Peripheral surfaces of each unit light guide member 27 is substantially vertical to the front surface of the LED board 18 excluding peripheral surfaces of extended portion 40 that will be described later.

A portion of the light guide plate 15 on the another end side in the long-side direction (a portion where no slit 26 is formed) is a mounting portion 28 that is mounted to the LED board 18. Two unit light guide members 27 are arranged parallel to each other in the X-axis direction (the short-side direction of the light guide plate 15) and provided integrally with each other via the mounting portion 28. Accordingly, a single light guide plate 15 is formed.

Light source holding spaces 29 for receiving the LEDs 14 therein are formed in the mounting portion 28 so as to run through in the thickness direction of the light guide plate 15. Each light source holding space 29 is formed in a rectangular shape that is long in the short-side direction of the light guide plate 15. A surface of one of inner walls for the light source holding space 29 which faces the light emitting surface 14a of the LED 14 is a light entrance surface 29A which light from the LED 14 enters.

A pair of the light source holding spaces 29 is provided in the short-side direction of the light guide plate 15 with a certain distance therebetween. Each light source holding space 29 is provided at substantially a middle portion of each unit light guide member 27 in the short-side direction. Namely, each light source holding space 29 is provided at substantially a middle portion between the slit 26 and either end of the light guide plate 15 in the short-side direction (either end extending in the long-side direction of the light guide plate 15). The light source holding spaces 29 are formed in positions so that light emitted from the LED 14 received in each light source holding space 29 does not enter the adjacent unit light guide member 27.

Clip insertion holes 31 are formed in the mounting portion 28. The clip insertion holes 31 are through holes in which the clips 22 are inserted for mounting the light guide plate 15 to the LED board 18 . Each clip insertion hole 31 is provided on either end of the mounting portion 28 in the width direction (the short-side direction of the light guide plate 15). The clip 22 inserted in the clip insertion hole 31 is inserted to the clip holding hole 23 in the LED board 18. Accordingly, the light guide plate 15 is mounted to the LED board 18 and the mounted state is maintained (see FIG. 4).

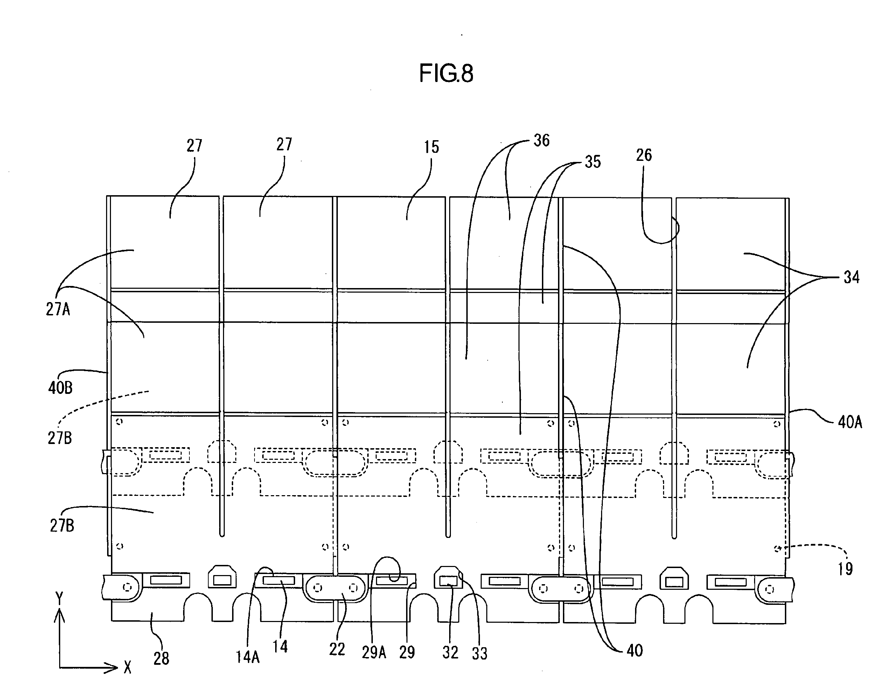

As illustrated in FIGS. 4 and 8, the clip 22 is formed to be provided over the adjacent light guide plates in the X-axis direction and the two adjacent light guide plates 15 are collectively fixed by the clip 22. The clip 22 includes an elastic holding member 22A (see FIG. 4). During the insertion process of the clip 22 into the clip holding hole 23, the elastic holding member 22A comes in contact with the clip holding hole 23 and is elastically deformed. After the clip 22 is inserted in the clip holding hole 23, the elastic holding member 22A is restored to its original shape and engaged to the rear surface of the LED board 18. Accordingly, the light guide plate 15 is fixed to the LED board 18 only by the simple one-touch operation of pushing the clip 22 through the clip insertion hole 31 and the clip holding hole 23.

Each board mounting portion 28 of the light guide plate 15 has a photo sensor holding space 33 for receiving a photo sensor 32 mounted on the LED board 18. The photo sensor holding space 33 is provided between the light source holding spaces 29 (at a position on an axis of the slit 26).

Each unit light guide member 27 is flat and includes a light exit portion 27A and a light guide portion 27B. Light emitted from the LED 14 and entering the light guide plate 15 exits through the light exit portion 27A. The light guide portion 27B guides the light emitted from the LED 14 and entering the light guide plate 15 to the light exit portion 27A. In each unit light guide member 27, an area closer to the light source holding space 29 is the light guide portion 27B and an area opposite from the light guide portion 27B is the light exit portion 27A. Light emitted from the LED 14 and striking the light entrance surface 19A and entering the unit light guide member 27 is totally reflected at multiple times while traveling though the light guide portion 27B and guided to the light exit portion 27A. Therefore, the light is less likely to leak from the light guide portion 27B to external spaces and exits from the light exit surface 34 of the light exit portion 27A (the surface of the light exit portion 27A). On the light guide plate 15, the board mounting portion 28 and the light guide portion 27B of each unit light guide member 27 are non-luminous portions.

A portion of the surface of the light guide plate 15 ranging from the side end on the mounting portion 28 side to a middle portion of the light exit portion 27A is a front-side sloped surface 35 (see FIG. 5). The front-side sloped surface 35 is slanted toward the front side in a gradual manner (so as to be farther from the surface of the LED board 18 in a gradual manner). The front-side sloped surface 35 is slanted so that the middle portion of the light exit portion 27A is farther from the LED board 18 than the end portion of the mounting portion 28. A portion of the surface of the light guide plate 15 ranging from the side end of the front-side sloped surface 35 to a distal end of the light exit portion 27A is a front-side flat surface 36 that is substantially parallel to the surface of the LED board 18. The surface of the light guide plate 15 is a smooth surface over an entire area.

A surface of the light exit portion 27A on the surface of each unit light guide member 27 (a part of the front-side sloped surface 35 and an entire surface of the front-side flat surface 36) is the light exit surface 34 of each unit light guide member 27. The light exit surface 34 of each unit light guide member 27 has a rectangular shape having a longer side in the long-side direction of the light guide plate 15 in the front-rear view.

A rear surface portion of the mounting portion 28 on a rear surface of each light guide plate 15 is a rear-side flat surface 37 that is substantially parallel to the surface of the LED board 18. A portion of the rear surface ranging from the end portion of the mounting portion 28 close to the light guide portion 27B side to the distal end of the light exit portion 27A is a rear-side sloped surface 38. The rear-side sloped surface 38 is slanted toward the front side in a gradual manner (so as to be separated from the surface of the LED board 18 in a gradual manner) . The rear-side sloped surface 38 is slanted so that the distal end portion of the light exit portion 27A is farther from the LED board 18 than the end portion of the mounting portion 28 close to the light guide portion 27B.

A thickness dimension (a dimension in the front-rear direction) of the light guide plate 15 changes in a plane of the light guide plate 15. Specifically, the thickness of the mounting portion 28 increases from the end portion to the light guide portion 27B side in a gradual manner. The thickness of the light guide portion 27B is substantially constant and the thickness of the light exit portion 27A is substantially constant except for the portion corresponding to the front-side flat surface 36. The portion corresponding to the front-side flat surface 36 reduces its thickness toward the distal end side (a side opposite from the light guide portion 27B) in a gradual manner.

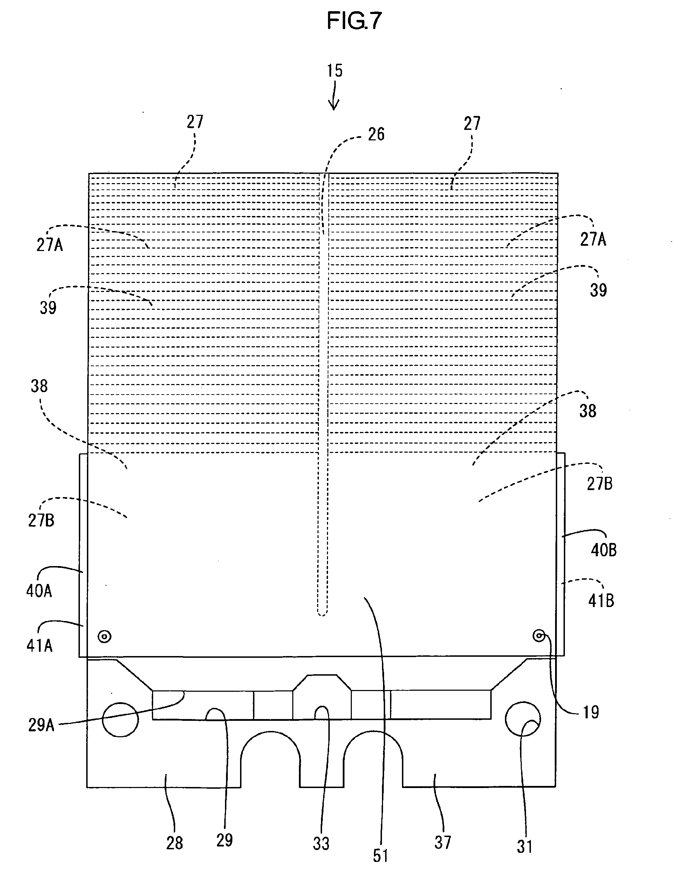

A rear surface of the light exit portion 27A on the rear surface of each unit light guide member 27 (a surface opposite from the light exit surface 34) is a scattering surface 39 that scatters light. Light is scattered by the scattering surface 39 and rays of light strike the light exit surface 34 at the incident angles smaller than the critical angle. Therefore, full reflection of light is less likely to be caused at the light exit surface 34. The scattering surface 39 is processed to form microscopic asperities thereon. Specifically, the scattering surface 39 has a number of lines of perforations that extend straight along the short-side direction of each unit light guide member 27. The arrangement pitch of the perforations is smaller on the distal end side (the upper side in FIG. 7) of the light exit portion 27A than the light guide plate 27B side (see FIG. 7). With this configuration, brightness in the area of the light exit portion 34 closer to the LED 14 is less likely to differ from brightness in the area of the light exit portion 34 father from the LED 14. Accordingly, substantially even brightness is achieved.

Positioning protrusions 19 are provided on positions on each light unit guide member 27 close to the mounting portion 28. The positioning protrusions 19 inserted in the positioning holes 21 in the LED board 18 to position the light guide plate 15 on the LED board 18.

A number of the light guide plates 15 are arranged on the surface of the LED board 18 such that the light exit surfaces 34 of the unit light guide members 27 are arranged in a plane (substantially parallel to the surface of the LED board 18) without having any gaps therebetween. The light guide plates 15 are arranged on the surface of the LED board 18 such that the mounting portions 28 are located on the lower side (on the negative side in the Y-axis direction) and the light exit portions 27A are located on the upper side (on the positive side in the Y-axis direction) (see FIG. 8).

A number of the light guide plates 15 are arranged in the X-axis direction and in the Y-axis direction. The light guide plates 15 are arranged in series in the Y-axis direction with one end portions in the long-side direction of the light guide plate 15 overlapping each other. Also, the series of the light guide plats 15 arranged in the Y-axis direction are arranged parallel to each other in the X-axis direction with certain gaps therebetween. The series of the light guide plates 15 in the Y-axis direction are arranged such that the light exit portion 27A of one unit light guide member 27 overlaps the light guide portion 27B of another unit light guide member 27 on a front side. In other words, a luminous portion (the light exit portion 27A) of one light guide plate 15 overlaps the non-luminous portion (a portion ranging from the mounting portion 28 to the light guide portion 27B) of another light guide plate 15 on a front side (see FIG. 5). Accordingly, the light exit surfaces 34 of the series of the light guide plates 15 are arranged in a row in the Y-axis direction without any gaps therebetween.

The series of the light guide plates 15 overlapping in the Y-axis direction are arranged in the X-axis direction with certain gaps therebetween (each gap substantially equal to the width of the slit 26). The series of the light guide plates 15 are arranged not to overlap each other in the X-axis direction except for the extended portions 40 that will be described later (see FIG. 8). Thus, the light exit surfaces 34 arranged in the Y-axis direction are arranged in the X-axis direction. As a result, the light exit surfaces 34 of all the light guide plates 15 (the light exit surfaces 34 of all the unit light guide members 27) are arranged over substantially an entire surface of the LED board 18 (substantially an entire surface of the bottom surface of the chassis 17). The light exit surfaces 34 of all the unit light guide members 27 provided for the light source unit 16 form the light exit surface 16A of the light source unit 16.

The extended portion 40 is provided on either end of the light guide plate 15 (either end in the arrangement direction in which the unit light guide members 27 are arranged) (see FIGS. 6 and 7). The extended portion 40 is provided along a side end of the each unit light guide member 27 opposite from the slit 26.
The extended portion 40 is provided on an area of the side end of the light guide plate 15 except for the mounting portion 28 and the light exit portion 27A. Namely, the extended portion 40 is provided on an area of the side end of the light guide plate 15 corresponding to the light guide portion 27B. The extended portion 40 is provided over an entire area of the side end of the light guide portion 27B in the long-side direction of the light guide plate 15.

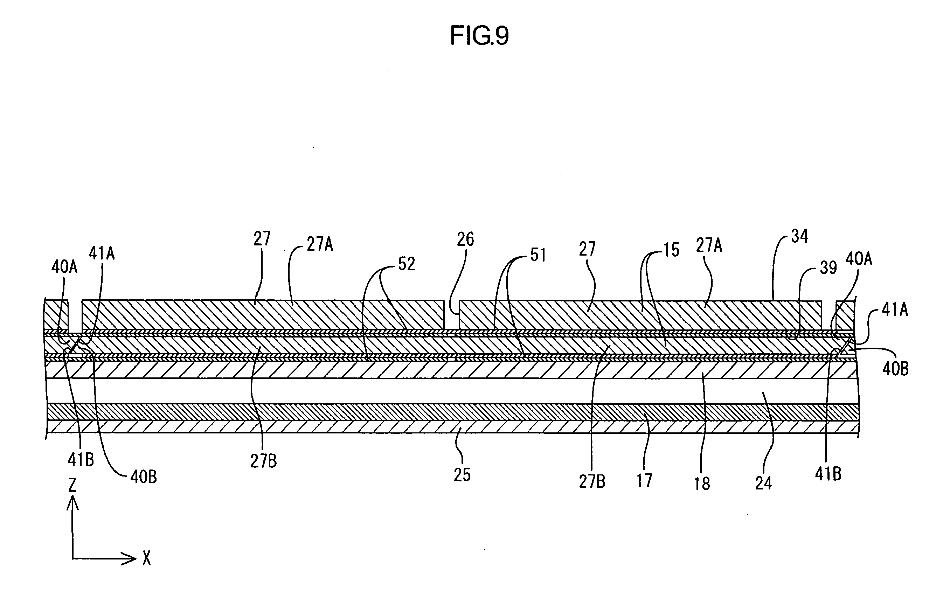

The extended portion 40 extends from each side end of the unit light guide member 27 so as to be formed in substantially a wedge-shape (see FIGS. 4 and 9). A dimension of the extended portion 40 in the front-rear direction is substantially equal to the dimension of the light guide portion 27B of the unit light guide member 27 in the front-rear direction (the thickness dimension). A maximum extended dimension of the extended portion 40 (the protruding dimension from the side end of the light guide plate 15) is substantially equal to the width dimension of the slit 26. The extended end surface of the extended portion 40 is a sloped surface 41 that is slanted to a plate surface of the light guide plate 15.

One of the two extended portions 40 provided on the single light guide plate 15 (referred to as a first extended portion 40A hereinafter) has the sloped surface 41 (referred to as a first sloped surface 41A) the extended dimension of which reduces toward the rear side in a gradual manner. The another one of the two extended portions 40 (referred to as a second extended portion 40B) has the sloped surface 41 (referred to as a second sloped surface 41B) the extended dimension of which reduces toward the front side in a gradual manner. The first sloped surface 41A and the second sloped surface 41B have substantially same inclination and are parallel to each other.

The first extended portion 40A is provided on one of the two facing side ends of the light guide plates that are arranged in adjacent to each other in the X-axis direction, and the second extended portion 40B is provided on the another one of the two facing side ends. The first extended portion 40A and the second extended portion 40B provided on the side ends that face each other in the X-axis direction are provided to overlap each other in the front-rear direction. The first sloped surface 41A faces the second sloped surface 41B in the front-rear direction and they are parallel to each other. The first extended portion 40A and the second extended portion 40B that are arranged to overlap each other in the front-rear direction are bare on the front side from a gap between the light exit portions 27A of the adjacent light guide plates 15 that overlap the light guide plates 15 having the first extended portion 40A and the second extended portion 40B on the front side. In other words, the gap between the light exit portions 27A of the light guide plates 15 that are arranged in adjacent to each other in the X-axis direction is closed by the overlapping first extended portion 30A and second extended portion 40B that are provided on the rear side.

A reflection sheet 51 for reflecting light to the inside of the unit light guide member 27 is provided on the rear side (the rear surface of the light guide plate 15) of the unit light guide member 27. The reflection sheet 51 is formed in a rectangular shape having a vertically long side and having an area substantially equal to the area of the rear surface of the light guide plate 15 excluding the mounting portion 28, namely, the area of the light guide portions 27B and the light exit portions 27A of two unit light guide members 27 (including the slit 26 and excluding the extended portions 40) (see FIG. 7). The reflection sheet 51 is made of synthetic resin and the surface thereof is white that provides high light reflectivity. The reflection sheet 51 is provided over the unit light guide members 27 that are provided with having the slit 26 therebetween. The reflection sheet 51 is attached to the rear surface of the light guide plate 15 with transparent adhesives (not illustrated).

Independently from the reflection sheet 51 attached to the light guide plate 15, an auxiliary reflection sheet 52 is provided on the rear surface of the light guide plate 15 over the light guide plates 15 that are arranged in adjacent to each other in the X-axis direction (see FIGS. 4 and 9). The auxiliary reflection sheet 52 has a shape and a size substantially same as the reflection sheet 51 and is also made of synthetic resin and the surface thereof is white that provides high light reflectivity. The auxiliary reflection sheet 52 is provided so that substantially a middle portion of the auxiliary reflection sheet 52 in the short-side direction is located at an interface between the light guide plates 15 that are arranged in adjacent to each other in the X-axis direction. Namely, substantially a half of the auxiliary reflection sheet 52 in the short-side direction is provided on the rear surface of one of the two light guide plates 15 that are arranged in adjacent to each other in the X-axis direction and substantially the rest half of the auxiliary reflection sheet 52 is provided on the rear surface of the another one of the two light guide plates 15. The auxiliary reflection sheet 52 is provided over the two unit light guide members 27. One of the two unit light guide members 27 is included in one of the two light guide plates 15 that are arranged in adjacent to each other in the X-axis direction and the another one of the two unit light guide members 27 is included in the another one of the two light guide plates 15.

The backlight unit 13 includes an optical member 53 provided on the front side (the light exit surface 34 side) of the light source unit 16. The optical member 53 includes two light diffusers 54 and optical sheets 55 (see FIG. 2). The light diffusers 54 ensure uniform brightness and are provided close to the light exit surface 34 of the light source unit 16. The optical sheets 55 are provided on the front side (the liquid crystal panel 11 side) of the light diffusers 54 and include three sheets placed on top of each other, more specifically, a diffusing sheet, a lens sheet and a reflection-type polarizing sheet arranged in this order from the rear side.

A support member 56 is provided on peripheral portions of the chassis 17. The support member 56 holds entire peripheral portions of the diffusers 54 from the rear side (see FIGS. 4 and 5). A frame 57 is provided between the peripheral portions of the diffusers 54 and the peripheral portions of the liquid crystal panel 11. The peripheral portions of the diffusers 54 are held between the support member 56 and the frame 57. A bezel 58 is provided on the front side of the peripheral portions of the liquid crystal panel 11 and the peripheral portions of the liquid crystal panel 11 are held between the bezel 58 and the frame 57. The optical sheets 55 are held between the diffusers 54 and the liquid crystal panel 11. The bezel 58, the frame 57 and the chassis 17 are fixed with screws 59 at predetermined positions to be assembled to the liquid crystal display device 10.

Next, an operation and effects of the first embodiment as configured above will be explained.
In the present embodiment, the unit light guide member 27 has a flat shape and has the light exit portion 27A and the light guide portion 27B. Light emitted from the LED 14 and entering the unit light guide member 27 exits from the light exit portion 27A. The light guide portion 27B guides light emitted from the LED 14 is guided to the light exit portion 27A. The extended portion 40 is provided on each of the facing side ends of the light guide plates 15 that are arranged in adjacent to each other in the X-axis direction. The extended portions 40 provided on the facing side ends extend so as to be fit to and overlap each other in the front-rear direction. A number of the light guide plates 15 are arranged in the Y-axis direction such that the light exit portion 27A of the unit light guide member 27 of one light guide plate 15 overlaps the light guide portion 27B of the unit light guide member 27 of another light guide plate 15 on the front side. The light guide plates 15 are arranged in the X-axis direction such that the extended portions 40 (the first extended portion 40A and the second extended portion 40B) overlap each other in the front-rear direction.

Accordingly, even if the light guide plates 15 are less likely to be arranged evenly, the gaps between the adjacent light guide plates 15 running through straight along the front-rear direction (non-luminous portion) are less likely to be widely opened. Therefore, dark lines are not displayed between the light guide plates 15 and display quality is not deteriorated.

The extended portion 40 is provided on the light guide portion 27B of the unit light guide member 27. Accordingly, the first extended portion 40A and the second extended portion 40B that overlap each other in the front-rear direction are provided between the light exit portions 27A of the light guide plates 15 that are arranged on the front side. Therefore, the gaps between the light exit portions 27A are irradiated with the light leaking from the first extended portion 40A and the second extended portion 40B, and dark lines are not displayed. The light guide portion 27B of the unit light guide member 27 has a greater thickness than the light exit portion 27A. Therefore, the extended portion 40 is easily formed on the light guide portion 27B compared to the case the extended portion 40 is formed on the light exit portion 27A.

The reflection sheet 51 is provided over the unit light guide members 27 that are arranged in adjacent to each other with having the slit 26 therebetween. The auxiliary reflection sheet 52 is provided over the unit light guide members 27 of the light guide plates 15 that are arranged in adjacent to each other in the X-axis direction. Accordingly, the light leaking from each unit light guide member 27 is reflected by the reflection sheet 51 or the auxiliary reflection sheet 52. Gaps between the adjacent unit light guide members 27 are irradiated with the reflected light and therefore dark lines are not displayed.

### <Second Embodiment>

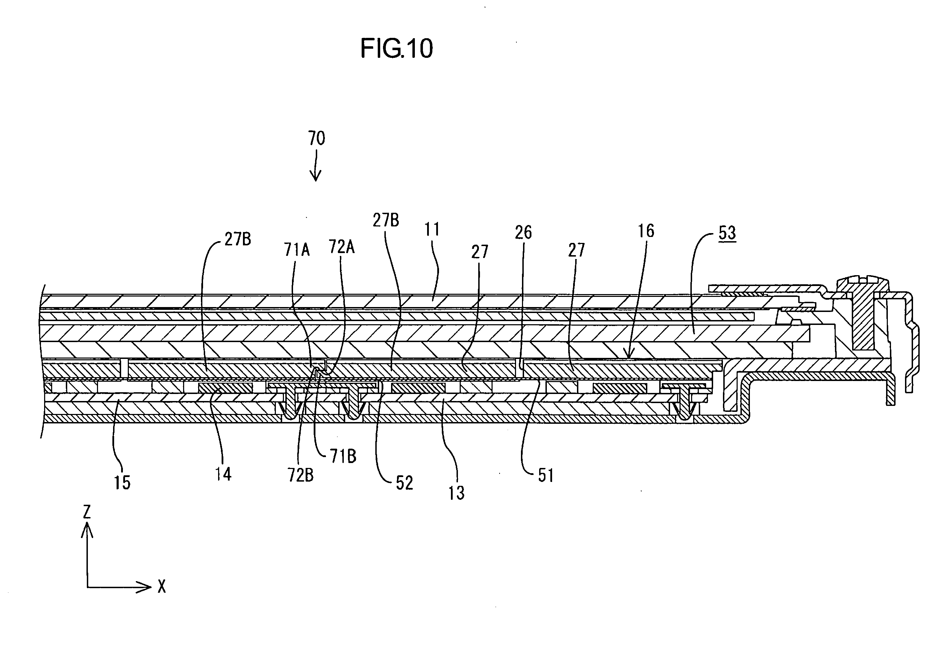

Next, a liquid crystal display device 70 of a second embodiment of the present invention will be explained with reference to FIG. 10.
In the second embodiment, a shape of an extended portion 71 is different from that in the first embodiment. The same components as the first embodiment will be indicated with the same symbols. The same configuration, functions and effects will not be explained.

The liquid crystal display device 70 of the present embodiment includes the liquid crystal panel 11 for displaying images and the backlight unit 13 that irradiates the liquid crystal panel 11 with light like the first embodiment. The backlight unit 13 includes the light source unit 16 and the optical members 53 like the first embodiment. The light source unit 16 includes the LEDs 14 and the light guide plates 15 that are arranged in a plane. The optical members 53 are provided on the front side of the light source unit 16.

Like the first embodiment, the light guide plate 15 includes the slit 26 and the unit light guide members 27 each of which is optically independent from each other are formed on the sides of the slit 26. Like the first embodiment, each unit light guide member 27 includes the light emit portion 27A and the light guide portion 27B. Light emitted from the LED 14 entering the unit light guide member 27 exits from the light exit portion 27A. The light guide portion 27B guides light emitted from the LED 14 to the light exit portion 27A.

An extended portion 71 is provided on either side end of the light guide plate 15. The extended portion 71 extends from one of a front-side end portion and a rear-side end portion of the light guide plate 15. The extended portion 71 has a square-shaped cross section and has a dimension in the front-rear direction is approximately a half of the dimension of the light guide portion 27B of the unit light guide member 27 in the front-rear direction (the thickness dimension). The extended dimension is substantially same as the width dimension of the slit 26. The extended dimension of the extended portion 71 is substantially constant in the front-rear direction. The extended end surface of the extended portion 71 is substantially vertical to the plate surface of the light guide plate 15.

A pair of the extended portions 71 provided on the single light guide plate 15 includes a first extended portion 71A provided on the front-side end portion of the light guide plate 15 and a second extended portion 71B provided on the rear-side end portion of the light guide plate 15. The first extended portion 71A and the second extended portion 71B have substantially a same shape and same size. The front surface of the first extended portion 71A is on the same plane as the front surface of the light guide plate 15 and they form a flat surface without any steps. The rear surface of the second extended portion 71B is on the same plane as the rear surface of the light guide plate 15 and they form a flat surface without any steps.

The rear surface of the first extended portion 71A and the front surface of the second extended portion 71B (the facing surfaces of the first extended portion 71A and the second extended portion 71B that overlap each other in the front-rear direction) are flat surfaces 72A, 72B that are substantially parallel to the plate surface of the light guide plate 15 (the plate surface of the unit light guide member 27) and they are parallel to each other. Because the first extended portion 71A and the second extended portion 71B are provided, the side surfaces of the light guide portion 27B of the light guide plate is formed to have a step.

Similar to the first embodiment, the first extended portion 71A is provided on one of the two facing side end portions of the light guide plates 15 that are arranged in adjacent to each other in the X-axis direction and the second extended portion 71B is provided on the another one of the two facing side end portions. The first extended portion 71A and the second extended portion 71B are arranged to overlap each other in the front-rear direction. The first extended portion 71A and the second extended portion 71B that are arranged to overlap each other in the front-rear direction are provided between the light exit portions 27A of the light guide plates 15 that are arranged on the front side.

According to the second embodiment, similar to the first embodiment, the light guide plates 15 are arranged in the X-axis direction and in the Y-axis direction so as to overlap each other in the front-rear direction. Therefore, even if the light guide plates 15 are less likely to be arranged evenly, large gaps running through the front-rear direction are less likely to be formed between the light guide plates 15. Therefore, the dark lines are not displayed between the light guide plates 15 and display quality is not deteriorated.

### <Other embodiments>

The present invention is not limited to the above embodiments explained in the above description. The following embodiments may be included in the technical scope of the present invention, for example.

(1) In the second embodiment, the rear surface of the first extended portion 71A and the front surface of the second extended portion 71B are the flat surfaces 72A, 72B that are substantially parallel to the plate surface of the light guide plate 15. However, the rear surface of the first extended portion and the front surface of the second extended portion may be sloped surfaces that are slanted to the plate surface of the light guide plate.

(2) In the second embodiment, the first extended portion 71A and the second extended portion 71B has substantially a same shape and a same size. However, each of the first extended portion and the second extended portion may have a different shape and a different size. For example, the dimension of the first extended portion in the front-rear direction (the thickness dimension) may be smaller than the dimension of the second extended portion in the front-rear direction (the thickness dimension).

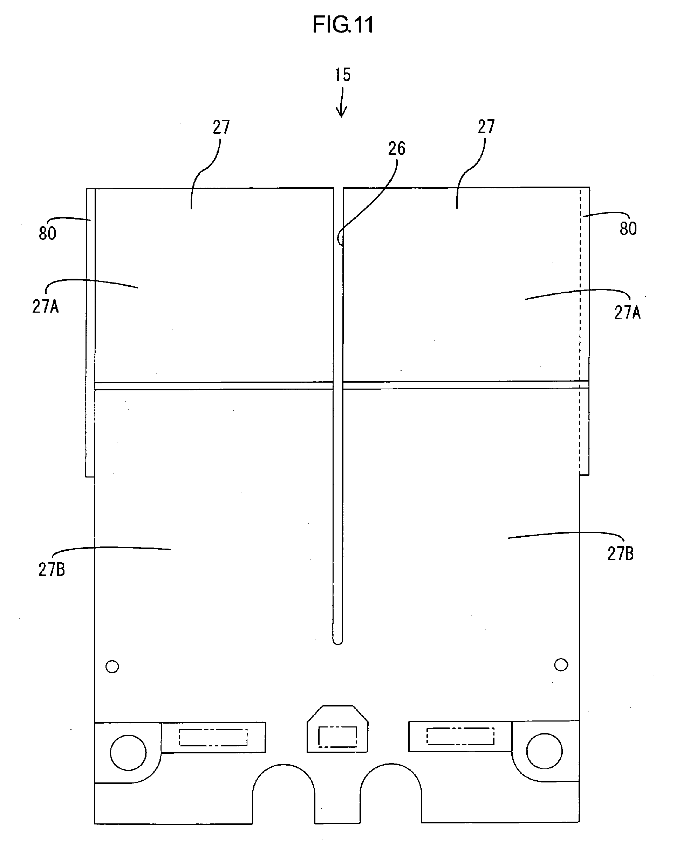

(3) In the above embodiments, the extended portion 40 (70) is provided only on the light guide portion 27B of the unit light guide member 27. However, for example, as illustrated in FIG. 11, an extended portion 80 may be provided only on the light exit portion 27A of the unit light guide member 27. With this configuration, the extended portions 80 of the light exit portions 27A of the adjacent light guide plates overlap each other in the front-rear direction. Therefore, large gaps running through the front-rear direction are less likely to be formed between the light exit portions 27A and the dark lines are not displayed between the light exit portions 27A.

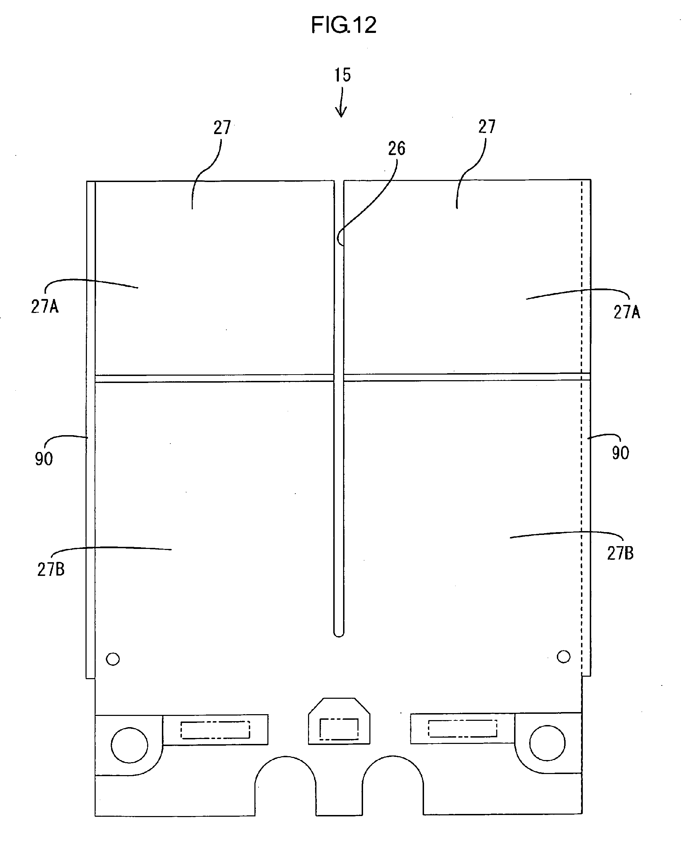

(4) In the above embodiments, the extended portion 40 (70) is provided on only the light guide portion 27B of the unit light guide member 27. However, as illustrated in FIG. 12, an extended portion 90 may be provided on an area of the unit light guide member 27 ranging from the light guide portion 27B to the light exit portion 27A.

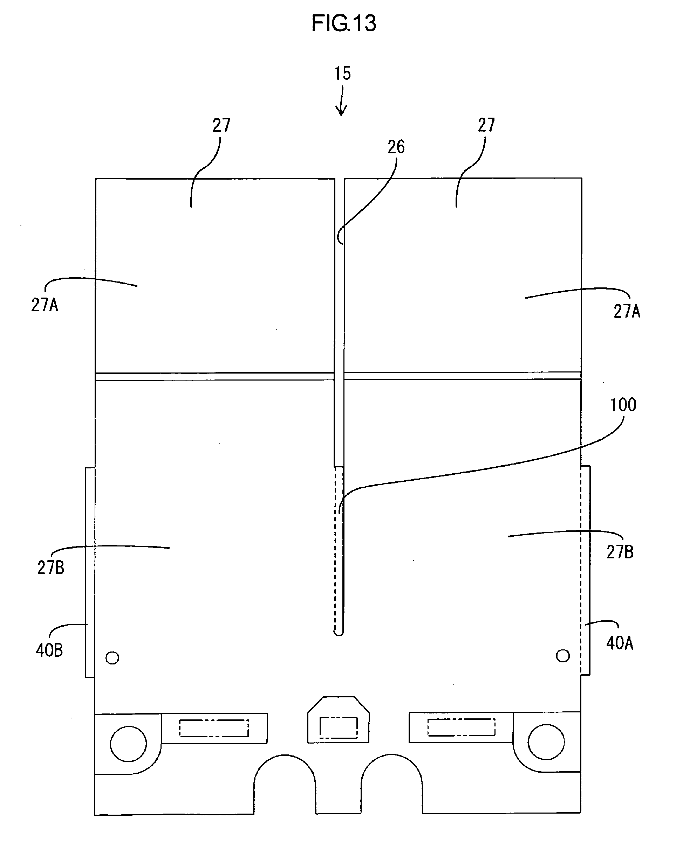

(5) In the above embodiments, the extended portion 40 (70) is provided only on the side end portions of the light guide plate 15. However, as illustrated in FIG. 13, in addition to the extended portions 40 provided on the two side end portions of the light guide plate 15, an extended portion 100 may be provided in the slit 26. Accordingly, no gap running through the front-rear direction is generated between the adjacent unit light guide members 27 of a single light guide plate 15. Therefore, the dark lines are not displayed.

## Claims

1. A light source unit comprising:
a light source; and
light guide members configured to guide light emitted from the light source and entering therein and arranged in a first direction and in a second direction that is substantially perpendicular to the first direction, wherein:
each of the light guide members having a light exit portion, a light guide portion, and an extended portion,
the light exit portion from which the light emitted from the light source and entering the light guide member exits,
the light guide portion guiding the light emitted from the light source and entering the light guide member to the light exit portion,
the extended portion provided on each of facing side ends of the light guide members that are arranged in adjacent to each other in the second direction, the extended portion extending from a corresponding side end; and
the light guide members are arranged in the first direction such that the light exit portion of one light guide member overlaps the light guide portion of another light guide member on a front side, and the light guide members are arranged in the second direction such that the extended portions provided on the facing side ends of the adjacent light guide members overlap each other in an overlapping direction in which the light exit portion and the light guide portion overlap each other.

2. The light source unit according to claim 1, wherein the extended portion is provided on the light guide portion of the light guide member.

3. The light source unit according to claim 1, wherein the extended portion is provided on the light exit portion of the light guide member.

4. The light source unit according to claim 1, wherein the extended portion is provided on an area ranging from the light guide portion to the light exit portion of the light guide member.

5. The light source unit according to any one of claims 1 to 4, wherein surfaces of the extended portions that overlap each other in the overlapping direction, the surfaces facing each other in the overlapping direction, are sloped surfaces having substantially same inclination.

6. The light source unit according to any one of claims 1 to 4, wherein surfaces of the extended portions that overlap each other in the overlapping direction, the surfaces facing each other in the overlapping direction, are flat surfaces substantially parallel to a plate surface of the light guide member.

7. The light source unit according to any one of claims 1 to 6, further comprising a reflection sheet provided on an area of the light guide member on a rear side corresponding to the light exit portion.

8. The light source unit according to any one of claims 1 to 7, further comprising an auxiliary reflection sheet provided on an area ranging over the light guide members on a rear side, the light guide members being arranged in adjacent to each other in the second direction.

9. The light source unit according to any one of claims 1 to 8, wherein the light guide members are integrally arranged in the second direction to form a single light guide plate, and the extended portion is provided each of at least two ends of the light guide plate in an arrangement direction in which the light guide members are arranged.

10. The light source unit according to claim 9, wherein a slit is provided between the light guide members and the extended portion is provided in the slit.

11. A lighting device comprising:
the light source unit according to any one of claims 1 to 10; and
an optical member provided on a light emitting surface side of the light source unit.

12. A display device comprising:
the lighting device according to claim 11; and
a display panel configured to provide display using light from the lighting device.

13. The display device according to claim 12, wherein the display panel is a liquid crystal panel including liquid crystals.

14. A television receiver comprising the display device according to any one of claims 12 and 13.
